Europäisches Patentamt

(19) European Patent Office

Office européen des brevets

(11) Publication number: **0 143 619**
**A1**

(12) # EUROPEAN PATENT APPLICATION

(21) Application number: **84308117.5**

(22) Date of filing: **22.11.84**

(51) Int. Cl.⁴: **A 47 J 31/54**, F 22 B 1/28

(30) Priority: **26.11.83 GB 8331630**

(43) Date of publication of application: **05.06.85**
**Bulletin 85/23**

(84) Designated Contracting States: **AT BE CH DE FR GB IT LI LU NL SE**

(71) Applicant: **Young, James, RB CATERING EQUIPMENT 30 Westfield Road, Edinburgh EH11 2QB (GB)**

(72) Inventor: **Young, James, RB CATERING EQUIPMENT 30 Westfield Road, Edinburgh EH11 2QB (GB)**

(74) Representative: **Wotherspoon, Graham et al, FITZPATRICKS 4 West Regent Street, Glasgow G2 1RS Scotland (GB)**

(54) **Portable boiler.**

(57) A portable boiler comprises first and second vessels (22, 24), the second vessel (24) being disposed within the first vessel (22), a conduit interconnecting the two vessels via a non-return valve (30), heating means (34) for the second vessel (24), inlet means for the intake of water into the first vessel (22) and outlet means for drawing off steam from the second vessel (24). The inlet means comprises a conduit (32) which passes through the first vessel (22) and is arranged to direct cold water over the surface of the second vessel (24). The cold water cools the second vessel (24), condensing the steam therein and producing a vacuum which sucks water from the first vessel (22) into the second vessel (24) via the non-return valve (30).

"Portable boiler"

The present invention relates to a portable boiler which utilises the principle of condensing steam for replenishing the boiler. It is particularly, but not exclusively, envisaged that the boiler is for use in the catering trade for making coffee and the like.

Generally, boilers used in the catering trade have to be plumbed into the existing water services. These boilers are therefore fixed in one position.

It is an object of the present invention to provide a self-standing portable boiler which can be easily transported without disconnecting the water supply.

The present invention accordingly provides a portable boiler comprising first and second vessels, said second vessel being disposed within said first vessel, means interconnecting said first and second vessels via valve means, inlet and outlet means for facilitating the intake of water and drawing off steam, and heating means, said inlet means comprising a conduit extending from a reservoir and adapted to pass through said first vessel and arranged to direct cold water over said second vessel.

Preferably, said vessels are made from stainless steel and said second vessel is provided with a detachable brass head.

Preferably, said valve means comprises a non-return ball valve.

Preferably, said outlet means comprises a plurality of suitable steam valves.

Preferably, said heating means comprises an electric heating element located within the ssecond vessel.

Preferably, said second vessel is provided with a probe for detecting the level of water in said vessel and is adapted to cut in and cut out said heating element if the water level reaches a predetermined

0143619

level.

Preferably, said probe communicates with indicating means, suitably in the form of a warning light or a buzzer.

Preferably also, said second vessel is provided with an overload cut-out.

Preferably, means are provided for priming said second vessel with cold water, suitably in the form of a conduit extending from said non-return valve and through said first vessel.

Preferably also, said second vessel is provided with an overload pressure release valve for safety purposes.

An embodiment of the present invention will now be described by way of example only, with reference to the accompanying drawings, in which:-

Figure 1 is a perspective view of the portable boiler according to the present invention;

Figure 2 is a diagrammatic cross-sectional side view of the portable boiler.

Figure 3 is a plan view of the vessels.

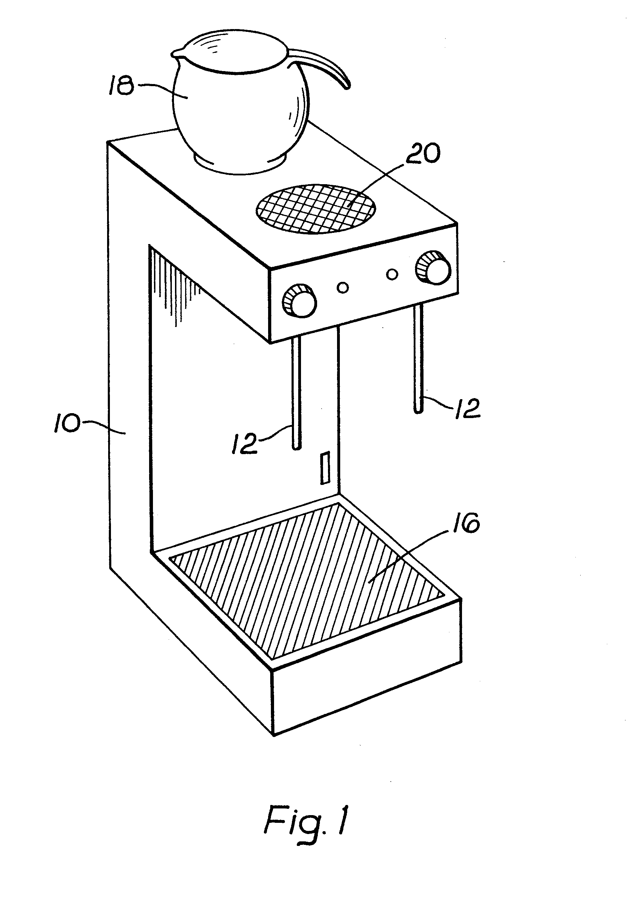

With reference to the drawings, Figure 1 shows a casing 10 which houses the boiler of the present invention. The casing 10 is provided with steam injectors 12, a removable drip tray 16, a water replenishing jug 18 and a water reservoir 20.

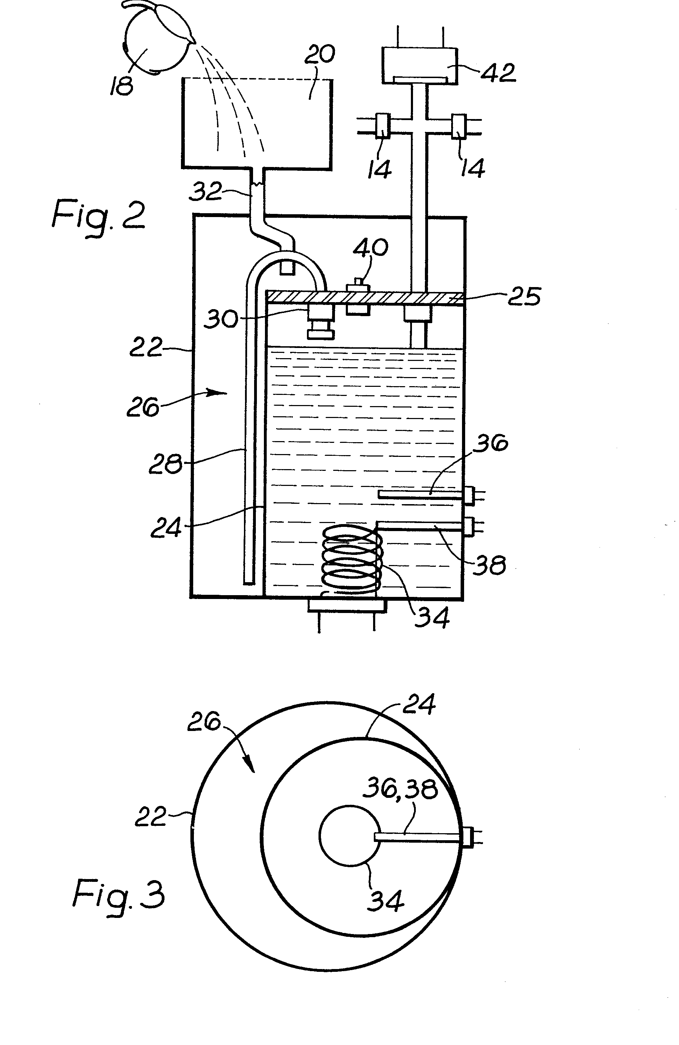

With reference to Figures 2 and 3, the present invention provides a portable boiler comprising first and second stainless steel vessels 22 and 24 respectively. The second vessel 24 is provided with a detachable brass head 25. The second vessel 24 is disposed eccentrically within said first vessel 22 such that a space 26 is defined between the vessels. The volume of this space 26 is at least equal to the volume of the second vessel 24. The second vessel 24 is preferably cylindrical while the first vessel 22 may be of any suitable shape according to cosmetic requirements.

A conduit 28 extends from the lower part of the spacer 26 within the first vessel to the second vessel 24 via a non-return ball valve 30.

The first vessel 22 is provided with inlet means in the form of a conduit 32 extending from the water reservoir 20 and arranged to direct cold water over the second vessel 24.

The second vessel 24 is provided with an outlet comprising steam valves 14. The second vessel 24 is also provided with heating means for heating the water in the vessel. As illustrated, the heating means comprises an electric heating element 34, however other heating means, such as bottled gas, may be used.

A probe 36 is provided for detecting the level of water in the second vessel 24 and is adapted to cut-in and cut-out the heating element 34 if the water reaches a predetermined level. The second vessel 24 is also provided with an overload cut-out 38 and an overload pressure release valve 40 for safety purposes.

In use, the water in the second vessel 28 is heated such that steam can be drawn off through steam valves 14.

When the water level reaches a predetermined level the probe 36 cuts-out the heating element 34 and cold water is poured into the reservoir 20 which then flows through the conduit 28 and fills the first vessel 22. The cold water cools the second vessel 24 to condense the steam therein and produce a vacuum which sucks in water from the first vessel 22 through the non-return valve 30. The probe 36 senses water and cuts-in the heating element 34. The water is heated, comes up to working pressure and steam can be drawn off for heating milk, soups, coffee and the like. A diaphragm pressure switch 42 activates a lamp (not shown) to indicate that the boiler is at working pressure.

When all the available water is used up, the probe 36 senses no water and cuts-out the heating element. A signal is sent to a warning light or buzzer which informs the operator that the boiler requires replenishing with fresh water. This process is repeated to ensure the availability of steam.

To prime the second vessel 24 with water initially, a suitable inlet (not shown) could be provided which extends from the first vessel 22 to the non-return valve 30 located on the second vessel.

CLAIMS

1.      A portable boiler comprising first and second vessels (22, 24), said second vessel (24) being disposed within said first vessel (22), means interconnecting said first and second vessels via valve means (30), heating means (34) for said second vessel (24), inlet means for the intake of water into said first vessel (22), and outlet means (14) for drawing off steam from said second vessel (24), characterised in that said inlet means comprising a conduit (32) extending from a reservoir (20), adapted to pass through said first vessel (22) and arranged to direct cold water from said reservoir (20) over the surface of said second vessel (24).

2.      A portable boiler as claimed in any preceding claim characterised in that said vessels are made from stainless steel and said second vessel is provided with a detachable brass head (25) and an overload pressure release valve (40).

3.      A portable boiler as claimed in any preceding claim characterised in that said valve means (30) comprises a non-return valve.

4.      A portable boiler as claimed in any preceding claim characterised in that said outlet means (14) comprises a plurality of steam valves.

5.      A portable boiler as claimed in any preceding claim characterised in that said heating means (34) comprises an electric heating element located within said second vessel (24).

6.      A portable boiler as claimed in any preceding claim characterised in that said second vessel (24) is provided with a probe (36) for detecting the level of water in said second vessel (24), said probe (36) being adapted to control said heating means (34) and/or to activate indicating means in response to the water level detected.

7.      A portable boiler as claimed in any preceding claim characterised in that said second vessel is provided with means for priming said second vessel (24) with water.

Fig.1

Fig. 2

Fig. 3

0143619

2/2

European Patent Office

0143619

Application number

EP 84 30 8117

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-1 697 115 (H. HARGREAVES) | | A 47 J 31/54<br>F 22 B 1/28 |
| A | CH-A- 327 662 (HGZ AG) | | |
| A | US-A-4 320 702 (K.J. SHEIN et al.) | | |
| A | GB-A-2 064 078 (CALOMAX) | | |
| A | DE-A-3 201 574 (E. BARTH) | | |
| A | US-A-1 646 746 (E.J. CARROLL) | | |

**TECHNICAL FIELDS SEARCHED (Int. Cl.4)**

A 47 J
F 22 B
F 24 M

The present search report has been drawn up for all claims

| Place of search | Date of completion of the search | Examiner |
|---|---|---|
| THE HAGUE | 01-03-1985 | SCHARTZ J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82